# EUROPEAN PATENT SPECIFICATION

(11) **EP 3 307 061 B1**
(45) Date of publication and mention of the grant of the patent: **04.11.2020**
(21) Application number: 16751363.9
(22) Date of filing: 10.06.2016
(51) Int. Cl.: A01K 61/00, A01K 73/10, A01K 79/00, A01K 80/00

(54) **FISHING SYSTEM FOR FISHING FOR SHRIMPS, FISH PROCESSING LINE AND VESSEL PROVIDED THEREWITH, AND METHOD THEREFOR**
SYSTEM ZUM FISCHEN VON GARNELEN, FISCHVERARBEITUNGSLINIE UND DAMIT AUSGERÜSTETES WASSERFAHRZEUG UND VERFAHREN DAFÜR
SYSTÈME DE PÊCHE POUR LA PÊCHE DES CREVETTES, CIRCUIT DE TRAITEMENT DU POISSON ET CUVE ASSOCIÉE, ET PROCÉDÉ CORRESPONDANT

(30) Priority: 10.06.2015 NL 2014949
(43) Date of publication of application: 18.04.2018
(73) Proprietor: Melbo International B.V., 8757 JR Gaast (NL)
(72) Inventor: DE BOER, Melle, 8757 JR Gaast (NL)
(74) Representative: Verdijck, Gerardus
(86) International application number: PCT/NL2016/050417
(87) International publication number: WO 2016/200260

(56) References cited:
- WO-A1-01/42992
- NL-C- 2 008 532
- US-A- 4 086 717
- US-A1- 2014 259 864

## Description

The present invention relates to a fishing system, in particular for fishing for shrimps, more particularly fishing with a beam or beaming method.

Known in practice are fishing nets which are used by fishing trawlers to catch shrimps. These are usually two funnel-shaped nets suspended laterally or obliquely behind the vessel during the actual fishing. After a period of time the nets are hoisted on board and emptied into a container. From this container the catch is sorted and unwanted bycatch is thrown overboard.

NL 2008532 C discloses a fish processing line with a fishing net and a sorting system.

A problem which occurs with the fishing nets known in practice is that much of the bycatch includes other species of fish which are exposed to a long period out of the water during the sorting such that these species of fish do not survive capture. Significant damage is therefore caused to marine life. In addition, fishing takes place in practice for unauthorized species and/or at unauthorized locations such that the origin of the catch is not sufficiently reliable.

The present invention has for its object to provide a fishing system, particularly suitable for fishing for shrimps, with which the above stated drawbacks are obviated or at least reduced.

This object is achieved with the fishing system according to claim 1.

By providing a fishing net, preferably in a funnel form, fish will enter the net on the entry side during fishing. In the context of the present invention fish are likewise understood to mean molluscs, crustaceans and shellfish. In the context of the present invention these fish particularly comprise shrimps. It has been found that the fishing system according to the invention can be applied in advantageous manner when fishing for shrimps, preferably when fishing with a beam or beaming method.

The automatic/electronic detection device enables detection of a caught fish, in particular a shrimp. The detection device can subsequently detect whether this catch falls within set limits and is thereby classified for further processing, or whether the catch is classified as bycatch and preferably thrown overboard, preferably via a bycatch discharge. It is optionally possible to have the detection device perform a further classification of the catch into a number of sub-classes. More detailed information about the catch is hereby obtained. This information can further optionally be used for additional sorting of the catch, for instance automatically and optionally already on board a vessel.

In a currently preferred embodiment the automatic detection device comprises a camera system for detecting and classifying shrimps or fish brought on board. It has been found that an effective detection and classification are hereby possible.

The registration system connected operatively according to the invention to the detection device receives the data from the detection device relating to, among other information, quantity and classification of the catch, optionally supplemented with information about sub-classes.

The registration system also receives information about the geographical location of the catch, preferably from a location determining system of the detection device or a location determining system connected operatively to the fishing system for linking location data to a registration. The location determining system for instance comprises a GPS unit for the location determination. These data enable fully or optionally partially automated inspection of the catch in respect of regulations, permits, certification etc. The data are preferably stored in grouped/linked manner.

The registration system can already transmit the relevant information in automatic manner from the vessel during or after the catch, for instance in a daily report to the authorities, and/or carry out a preferably automated comparison with the catch criteria. The registration system is configured such that an alarm is generated if the catch falls outside the criteria and/or comes close to doing so. These criteria relate to for instance the quantity, species, location and the like.

By providing transfer means with at least one outlet arranged on the net in a currently preferred embodiment the catch can be discharged during fishing. This discharge preferably takes place in a continuous and/or semi-continuous manner without the net having to be hoisted out of the water. This achieves that a semi-continuous, and preferably continuous flow of caught fish is discharged from the fishing net for further processing. Hereby achieved is that the unwanted caught fish do not remain for a long time in the net and already die there, thus causing damage.

An additional advantage of the semi-continuous, or preferably continuous fishing according to the invention is that a sorting into wanted catch, in particular shrimps, and unwanted bycatch can likewise be performed in semi-continuous manner. This means that the discharged catch can be sorted relatively quickly and, if relevant, can be thrown back into the water. Compared to a batch processing wherein fishing nets are hoisted on board and emptied into a container, the bycatch is exposed for considerably less time to the conditions on board, including a period without water, for the purpose of sorting. The chance of the unwanted bycatch surviving is hereby increased enormously, and the damage to marine life resulting from shrimp fishing will be greatly reduced.

The outlet is preferably provided with a pump for bringing the caught fish on deck during fishing. By providing a pump water can be suctioned out of the fishing net with the caught fish and preferably brought on deck using the pump. The outlet is preferably provided here in the form of a tube with a watertight covering at least in the connecting part between the water surface and the boat deck. The pump preferably operates in continuous manner during catching. Alternatively or additionally, the pump can also be used intermittently, i.e. periodically.

The use of the pump reduces the necessity of interim hauling in of the net during fishing, which can even be dispensed with during fishing. This achieves the above stated advantages.

Also achieved is that the effective fishing time can be extended since the fishing nets can remain in the water and need not be hoisted in at intervals. This further increases the overall efficiency of the fishing.

It has been found that the number of undersized shrimps and other unwanted bycatch returned alive to the water can be substantially increased to above 90%, preferably to above 95% and up to substantially 100%.

In an advantageous preferred embodiment according to the invention the fishing system comprises a singulator configured to supply to the detection device singulated shrimps or fish brought on board.

Providing a singulator further improves the performance of the detection device. In a currently preferred embodiment the singulator comprises two or more conveyor belts which in use move at a differing speed, and wherein the first conveyor belt comprises a wire mesh belt. The wire mesh belt provides for a (further) removal of water from the catch. Because of the difference in speed the catch is delivered with intermediate spacing to the detection device. The detection can hereby be improved. Additionally or alternatively, use can be made of a robot or robot arm for detecting and/or sorting fish.

In an advantageous preferred embodiment according to the invention the transfer means comprising a brine tank provided with a first separating grid arranged at the inlet of the brine tank and/or a second separating grid arranged at the outlet of the brine tank.

A preselection of the catch is already made possible by providing a brine tank with first and/or second separating grids. Bycatch can for instance hereby be thrown overboard more quickly.

In an advantageous preferred embodiment according to the invention the fishing system comprises an electronic reporting system configured for automatic reporting of the data.

As a result of the automatic reporting with the relevant data a check can be carried out offline and/or on-line by for instance the authorities, certification organizations, consumer and retail organizations. This further increases the transparency of the catch and monitoring options are available.

The invention also relates to a fish processing line on board a vessel for processing shrimps, comprising:
- a fishing system as described above wherein the fishing net is provided with an entry side for catching shrimps or fish and an outlet arranged on the net for discharging caught shrimps or fish during the fishing; and
- a processing line for processing shrimps connected operatively to the detection device.

Such a fish processing line provides the same effects and advantages as stated for the fishing system.

The processing line preferably further comprises a cooking and peeling device. Shrimps can hereby be processed on board the vessel. The cooking and peeling device more preferably comprises a combined device for performing a cooking process and a peeling process. The detection device is likewise preferably provided upstream of the cooking and peeling device.

A fresher end product is also realized by processing the captured shrimps on board. This is achieved because the processing takes place more quickly after the capture and a number of intermediate steps onshore can therefore be avoided. Such intermediate steps include for instance transport to peeling centres. It is also better possible to register and link the catch to the products delivered to the end consumer. Because of the quicker processing it is also possible to wholly or partially dispense with the addition of preservatives.

The use of energy can in addition be further reduced by the central and immediate processing. Compared to conventional practice it is thus possible to avoid an additional cooling having to be carried out between catching and processing. This further improves the sustainability of the whole catch, including processing.

Cooking improves the shelf-life of the caught and already sorted shrimps. By carrying out peeling on board the vessel immediately after the cooking additional operations onshore are further avoided. Peeling can be performed more effectively by carrying out the peeling immediately after the cooking. Peeling is preferably carried out by machine. This reduces the energy consumption in the whole chain and thereby increases the sustainability of a shrimp catch in particular.

An advantage achieved with the fish processing line according to the invention lies in the immediate peeling after cooking. It has been found that peeling hot shrimps coming directly from the cooking process can be performed more effectively. A combined cooking and peeling device is therefore preferably applied according to the invention. Performing the detection step with sorting step prior to the cooking process avoids such a sorting step having to be performed between the cooking and the peeling. In the sorting step prior to the cooking process use is preferably made of said camera system, since a good sorting is possible therewith. It has been found that use of conventional sorters, such as a rinsing machine or sieve shaker, between cooking and peeling is not required. This reduces the complexity of the processing line and the stated advantages are also achieved.

The fish processing line according to invention is preferably applied on a vessel for optimal utilization of the stated advantages. It is however also possible to apply the line according to the invention onshore, for instance in or close to the port, so that the catch can be processed quickly.

The invention also relates to a vessel provided with a fishing system and/or a fish processing line as described above.

Such a vessel provides the same effects and advantages as stated for the fishing system and/or the fish processing line.

The invention further relates to a method for catching and on-board processing of shrimps in semi-continuous or continuous manner, comprising of:
- catching, bringing on board, detecting, classifying and if desired sorting the shrimps or fish brought on board with a fishing system and/or fish processing line as described above;
- receiving, storing and reading and/or transmitting data obtained with the detection device about the shrimps or fish brought on board, using a registration system connected operatively to the detection device,
wherein the data comprise information about the quantity, classification and location of the caught shrimps or fish.

Such a method provides the same effects and advantages as stated for the fishing system and the fish processing line.

Particularly the chance of survival of unwanted bycatch can be considerably increased by the semi-continuous, and preferably continuous method of processing the catch. In addition, the energy consumption can be greatly reduced, wherein the energy consumption relates to the whole chain.

The method preferably comprises of automatically transmitting the data and thereby monitoring the catch with valid catch criteria. This increases reliability and monitoring of the catch.

The method optionally comprises the step of processing the shrimps on board. The above stated advantages are hereby achieved.

Further advantages, features and details of the invention are elucidated on the basis of a preferred embodiment thereof, wherein reference is made to the accompanying drawings, in which:
- figure 1 shows a view of a vessel provided with a fishing system according to the invention; and
- figure 2 is a schematic representation of the method according to the invention.

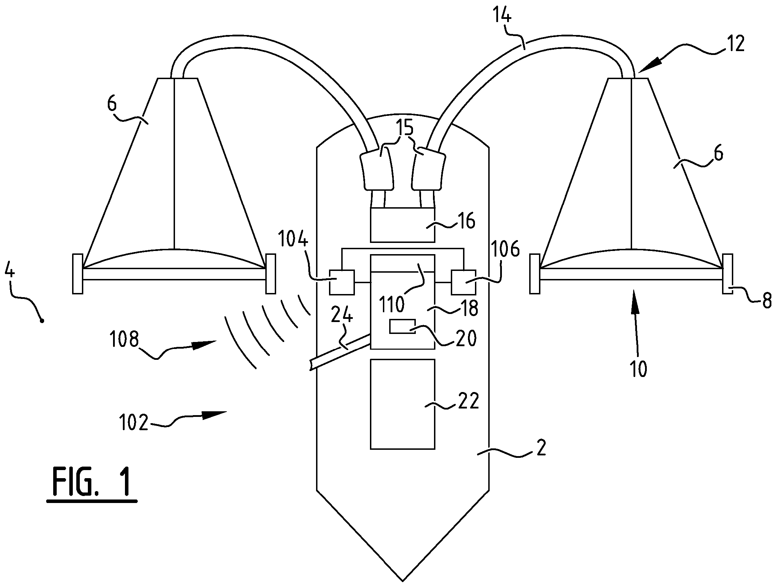

A vessel 2 (figure 1) lies in water 4 and is provided on either side with a net 6 during the shown fishing. During use net 6 is suspended in water 4 using frame 8 and provided with entry 10. Fish and shrimps swim into net 6 at entry 10.

In the shown embodiment outlet 12 is provided on the rear side of net 6. Via transfer means, formed in the shown embodiment as hose or tube 14, the catch is carried using pump 15 into a brine tank 16 provided with an inlet grid and an outlet grid. From brine tank 16 the catch is transferred to detection device 18 which in the shown embodiment is provided with camera system 20. In a possible embodiment the transport speed at the position of camera system 20 is about 100 mm per second. It has been found that practical implementation of the sorting is hereby obtained.

In the shown embodiment the sorted shrimps are optionally further transported to cooking and peeling device 22. Sorted unwanted bycatch is discarded via discharge 24 and thrown back into water 4.

Fishing system 102 comprises detection device 18 with which the catch is monitored on the basis of valid criteria. The catch is classified and registered with registration system 104. Use is made here of GPS system 106 for determining the location of the catch. Registration system 104 is optionally provided with transmission means for sending relevant data with signal 108. Provided between brine tank 16 and detection device 18 is singulator 110 with a wire mesh belt and two or more further conveyor belts.

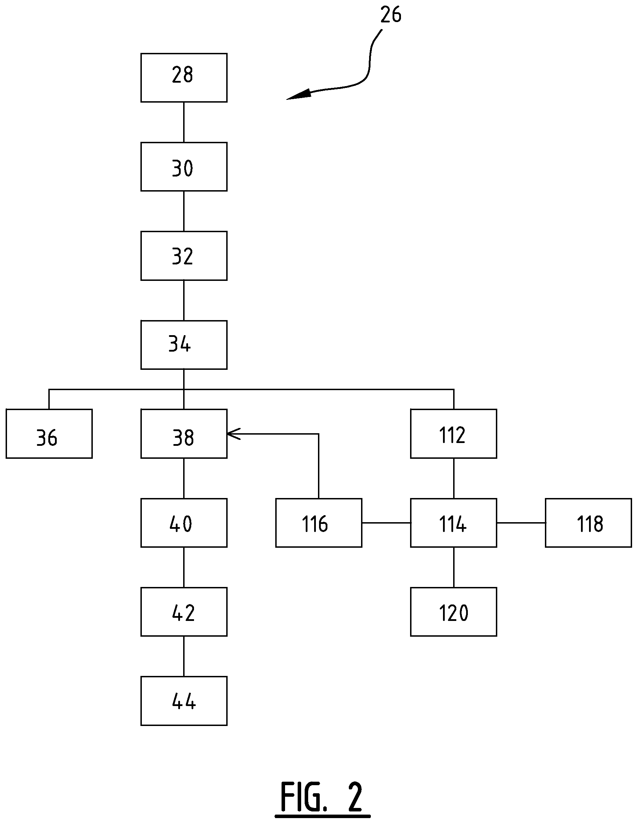

The whole process 26 (figure 2) comprises of positioning 28 vessel 2 in water 4 with nets 6 at or close to a desired geographical location. Fishing 30 then begins wherein the catch is brought on board using pump 15 in a continuous or semi-continuous fishing step 32. Pump 15 suctions the catch out of outlet 12 via hose or tube 14. Stones and shells are removed from the catch as it is brought on board in step 32, for instance with the grids of brine tank 16.

Detection and/or sorting 34 subsequently takes place, preferably with camera system 20. During sorting 34 the shrimps and bycatch are singulated using a singulator 110 making use of for instance a vibrating sieve and/or a conveyor belt. The bycatch is separated from the shrimps in sorting step 34. The shrimps are optionally sorted into a number of classes, for instance three size-classes.

Bycatch is thrown back overboard via discharge 24 in discharge step 36. The total time the bycatch remains on board amounts to a time period of seconds to two to three minutes.

The relevant data of the catch are stored in registration step 112. In monitoring step 114 the data are monitored in preferably automatic manner in respect of the valid criteria. This monitoring can take place on-line through monitoring within registration system 104 and/or via exchange of data 108 with the shore for monitoring there. The monitoring can also take place offline, for instance after return to port. The monitoring can entail approval for further processing in approval step 116, wherein further processing can take place on board and/or onshore. During the approval step permission for certification can also be given in certifying step 118. In inspection step 120 the catch can be inspected using the approval data by the fisherman and/or authorities and/or third parties and an alarm is generated, for instance when the catch quota is reached at the relevant geographical location.

During the process 38 of cooking the sorted shrimps the shrimps are preferably cooked individually and then preferably peeled immediately during peeling step 40. This peeling preferably takes place by machine.

Following the cooking process the shrimps are cooled during cooling process 42 and held for instance in a container filled with water at about 5°C. Other cooled storage techniques are also possible. The cooled shrimps are subsequently further processed during further handling 44, including packaging and transport.

The present invention is by no means limited to the above described preferred embodiments thereof. The rights sought are defined by the following claims, within the scope of which many modifications can be envisaged. It is thus possible following sorting to provide an additional sorter, for instance in the form of a bycatch device, in order to perform a second sorting. It is also possible to carry out detection of fish and sorting of fish with a robot (arm).

## Claims

1. Fishing system (102), comprising:
- a fishing net (6) for catching shrimps or fish;
- transfer means (14) connected operatively to the fishing net for bringing on board the caught shrimps or fish;
- an automatic detection device (18) configured to detect, classify and if desired sort the shrimps or fish brought on board;
- a registration system (104) connected operatively to the detection device and configured to receive, store and read and/or transmit data obtained with the detection device about the shrimps or fish brought on board,
wherein the data comprise information about the quantity, classification and location of the caught shrimps or fish, wherein said fishing system further comprises a location determining system (106) connected operatively to the registration system for linking location data to a registration of a catch, and wherein the registration system is configured to generate an alarm if the catch falls outside and/or exceeds one or more of the catch criteria and/or comes close to doing so.

2. Fishing system as claimed in claim 1, wherein the detection device comprises a camera system (20) for detecting and classifying shrimps or fish brought on board.

3. Fishing system as claimed in one or more of the foregoing claims, further comprising a singulator (110) configured to supply to the detection device singulated shrimps or fish brought on board.

4. Fishing system as claimed in claim 3, wherein the singulator comprises two or more conveyor belts which in use move at a differing speed such that there is a difference in speed between the conveyor belts, and wherein the first conveyor belt comprises a wire mesh belt.

5. Fishing system as claimed in one or more of the foregoing claims, wherein the transfer means comprise a brine tank (16) provided with a first separating grid arranged at an inlet of the brine tank and/or a second separating grid arranged at an outlet of the brine tank.

6. Fishing system as claimed in one or more of the foregoing claims, further comprising a bycatch discharge (24) for throwing back unwanted by catch.

7. Fishing system as claimed in one or more of the foregoing claims, further comprising an electronic reporting system configured for automatic reporting of the data.

8. Fish processing line on board a vessel for processing shrimps, comprising:
- a fishing system (102) as claimed in one or more of the foregoing claims, wherein the fishing net is provided with an entry side for catching shrimps or fish and an outlet arranged on the net for discharging caught shrimps or fish during the fishing; and
- a processing line for processing shrimps connected operatively to the detection device.

9. Fish processing line as claimed in claim 8, wherein the processing line further comprises a cooking and peeling device (22), wherein the cooking and peeling device preferably comprises a combined device for performing a cooking process and a peeling process.

10. Fish processing line as claimed in claim 9, wherein the detection device is provided upstream of the cooking and peeling device.

11. Vessel (2) provided with a fishing system (102) and/or fish processing line as claimed in one or more of the foregoing claims.

12. Method (26) for catching and bringing shrimps or fish on board in semi-continuous or continuous manner, comprising of:
- catching, bringing on board, detecting, classifying and if desired sorting the shrimps or fish brought on board (32) with a fishing system (102) and/or fish processing line as claimed in one or more of the foregoing claims;
- receiving, storing and reading and/or transmitting data obtained with the detection device about the shrimps or fish brought on board, using the registration system connected operatively to the detection device,
wherein the data comprise information about the quantity, classification and location of the caught shrimps or fish, further comprising the step of:
- automated inspection of the catch in respect of regulations, permits and certification, and generating an alarm if the catch falls outside and/or exceeds one or more of the catch criteria and/or comes close to doing so.

13. Method as claimed in claim 12, further comprising the step of throwing back unwanted bycatch (36) and/or further comprising the step of processing the shrimps on board.

14. Method according to claim 12 or 13, further comprising the step of automatically transmitting the data and thereby monitoring the catch with valid catch criteria.

## Patentansprüche

1. System zum Fischen (102), umfassend:
- ein Fischernetz (6) zum Fangen von Garnelen oder Fischen;
- Transfermittel (14), welche operativ mit dem Fischernetz verbunden sind, zum an Bord Bringen der gefangenen Garnelen oder Fische;
- eine automatische Detektionsvorrichtung (18), welche konfiguriert ist, um die Garnelen oder Fische, welche an Bord gebracht werden, zu detektieren, zu klassifizieren und, falls gewünscht, zu sortieren;
- ein Registrierungssystem (104), welches operativ mit der Detektionsvorrichtung verbunden ist, um Daten, welche mit der Detektionsvorrichtung über die Garnelen und Fische, welche an Bord gebracht wurden, erhalten wurden, zu empfangen, zu speichern und zu lesen und/oder zu übertragen,
wobei die Daten Informationen über die Menge, die Klassifizierung und den Ort der gefangenen Garnelen und Fische umfassen, wobei das System zum Fischen weiterhin ein Ortsbestimmungssystem (106) umfasst, welches operativ mit dem Registrierungssystem verbunden ist, zum Verlinken von Ortsdaten mit einer Registrierung eines Fangs, und wobei das Registrierungssystem konfiguriert ist, um eine Warnung zu erzeugen, wenn der Fang aus einem oder mehreren Fangkriterien herausfällt und/oder überschreitet und/oder kurz davor ist, dies zu tun.

2. System zum Fischen gemäß Anspruch 1, wobei die Detektionsvorrichtung ein Kamerasystem (20) zum Detektieren und Klassifizieren von Garnelen oder Fischen, welche an Bord gebracht wurden, umfasst.

3. System zum Fischen gemäß einem oder mehreren der vorhergehenden Ansprüche, weiterhin einen Vereinzeler (110) umfassend, welcher konfiguriert ist, um der Detektionsvorrichtung vereinzelte Garnelen oder Fische, welche an Bord gebracht wurden, zuzuführen.

4. System zum Fischen gemäß Anspruch 3, wobei der Vereinzeler zwei oder mehrere Förderbänder umfasst, welche sich im Gebrauch mit einer unterschiedlichen Geschwindigkeit bewegen, so dass es einen Unterschied in der Geschwindigkeit zwischen den Förderbändern gibt, und wobei das erste Förderband ein Drahtnetzband umfasst.

5. System zum Fischen gemäß einem oder mehreren der vorhergehenden Ansprüche, wobei das Transfermittel einen Solebehälter (16) umfasst, welcher mit einem ersten Trenngitter versehen ist, welches an einem Einlass von dem Solebehälter angeordnet ist, und/oder ein zweites Trenngitter, welches an einem Auslass von dem Solebehälter angeordnet ist.

6. System zum Fischen gemäß einem oder mehreren der vorhergehenden Ansprüche, weiterhin eine Beifangentsorgung (24) zum Zurückwerfen eines ungewollten Beifangs umfassend.

7. System zum Fischen gemäß einem oder mehreren der vorhergehenden Ansprüche, weiterhin ein elektronisches Berichterstattungssystem umfassend, welches konfiguriert ist zum automatischen Berichterstatten der Daten.

8. Fischverarbeitungslinie an Bord eines Schiffs zur Verarbeitung von Garnelen, umfassend:
- ein System zum Fischen (102) gemäß irgendeinem der vorhergehenden Ansprüche, wobei das Fischernetz mit einer Eintrittsseite zum Fangen von Garnelen oder Fischen versehen ist, und wobei ein Auslass an dem Netz angeordnet ist, zum Ausgeben gefangener Garnelen oder Fische während des Fischens; und
- eine Verarbeitungslinie zum Verarbeiten von Garnelen, welche operativ mit der Detektionsvorrichtung verbunden ist.

9. Fischverarbeitungslinie gemäß Anspruch 8, wobei die Verarbeitungslinie weiterhin eine Koch- und Schälvorrichtung (22) umfasst, wobei die Koch- und Schälvorrichtung vorzugsweise eine kombinierte Vorrichtung zum Durchführen eines Kochprozesses und eines Schälprozesses ist.

10. Fischverarbeitungslinie gemäß Anspruch 9, wobei die Detektionsvorrichtung stromaufwärts von der Koch- und Schälvorrichtung vorgesehen ist.

11. Schiff (2), welches mit einem System zum Fischen (102) und/oder einer Fischverarbeitungslinie gemäß einem oder mehreren der vorhergehenden Ansprüche versehen ist.

12. Verfahren (26) zum Fangen und an Bord Bringen von Garnelen oder Fischen in einer halb-kontinuierlichen oder kontinuierlichen Art und Weise, umfassend:
- Fangen, an Bord Bringen, Detektieren, Klassifizieren und, wenn gewünscht, Sortieren der Garnelen oder Fische, welche an Bord (32) mit einem System zum Fischen (102) gebracht wurden, und/oder einer Fischverarbeitungslinie gemäß einem oder mehreren der vorhergehenden Ansprüche;
- Empfangen, Speichern und Lesen und/oder Übertragen der Daten, welche mit der Detektionsvorrichtung über die Garnelen oder Fische, welche an Bord gebracht wurden, erhalten wurden, unter Verwendung des Registrierungssystems, welches operativ mit der Detektionsvorrichtung verbunden ist,
wobei die Daten Informationen über die Menge, die Klassifizierung und den Ort von den gefangenen Garnelen oder Fischen umfassen, weiterhin den folgenden Schritt umfassend:
- automatisierte Inspektion des Fangs hinsichtlich der Bestimmungen, Genehmigungen und Zertifizierung und Erzeugen einer Warnung, wenn der Fang außerhalb eines oder mehrerer Kriterien liegt oder überschreitet, und/oder kurz davor ist, dies zu tun.

13. Verfahren gemäß Anspruch 12, weiterhin den Schritt des zurück Werfens von ungewolltem Beifang (36) und/oder den Schritt des Verarbeitens der Garnelen an Bord umfassend.

14. Verfahren gemäß Anspruch 12 oder 13, weiterhin umfassend den Schritt des automatischen Übertragens der Daten und dadurch Überwachen des Fangs mit gültigen Fangkriterien.

## Revendications

1. Dispositif de pêche (102), comprenant :
un filet de pêche (6) destiné à attraper des crevettes ou poissons ;
des moyens de transfert (14) couplés de manière opérationnelle au filet de pêche afin de ramener à bord les crevettes ou poissons attrapés ;
un dispositif de détection automatique (18) configuré de manière à détecter, classifier et, si désiré, trier les crevettes ou poissons ramenés à bord ;
un dispositif d'enregistrement (104) raccordé de manière opérationnelle au dispositif de détection et configuré afin de recevoir, mémoriser et lire et/ou transmettre des données concernant les crevettes ou poissons ramenés à bord obtenues avec le dispositif de détection,
dans lequel les données comprennent des informations sur la quantité, la classification et la position des crevettes ou poissons attrapés, dans lequel ledit dispositif de pêche comprend, en outre, un dispositif de détermination de position (106) raccordé de manière opérationnelle au dispositif d'enregistrement afin de relier des données de position à un enregistrement d'une prise, et dans lequel le dispositif d'enregistrement est configuré de manière à produire une alarme si la prise se trouve hors des critères de prise et/ou excède un ou plusieurs de ceux-ci et/ou s'en rapproche.

2. Dispositif de pêche selon la revendication 1, dans lequel le dispositif de détection comporte un dispositif de caméra (20) afin de détecter et de classifier les crevettes ou poissons ramenés à bord.

3. Dispositif de pêche selon une ou plusieurs des revendications précédentes, comprenant, en outre, un séparateur (110) configuré de manière à délivrer au dispositif de détection les crevettes ou poissons séparés ramenés à bord.

4. Dispositif de pêche selon la revendication 3, dans lequel le séparateur comprend deux bandes de convoyeur, ou plus, qui, en service, se déplacent à une vitesse différente de telle sorte qu'il existe une différence de vitesse entre les bandes de convoyeur, et dans lequel la première bande de convoyeur comprend une bande en treillis métallique.

5. Dispositif de pêche selon une ou plusieurs des revendications précédentes, dans lequel les moyens de transfert comprennent un réservoir de saumure (16) équipé d'une première grille de séparation agencée au niveau d'une entrée du réservoir de saumure et/ou une seconde grille de séparation agencée au niveau d'une sortie du réservoir de saumure.

6. Dispositif de pêche selon une ou plusieurs des revendications précédentes, comprenant, en outre, un dispositif de déchargement de prise accessoire (24) afin de rejeter les prises accessoires indésirables.

7. Dispositif de pêche selon une ou plusieurs des revendications précédentes, comprenant, en outre, un dispositif d'établissement de rapport électronique configuré de manière à communiquer le rapport automatique des données.

8. Ligne de traitement de poissons à bord d'un navire destinée à traiter des crevettes, comprenant :
un dispositif de pêche (102) selon une ou plusieurs des revendications précédentes, dans lequel le filet de pêche comporte un côté d'entrée afin d'attraper les crevettes ou poissons et une sortie agencée sur le filet afin de décharger les crevettes ou poissons attrapés pendant la pêche ; et
une ligne de traitement destinée à transformer les crevettes, raccordée de manière opérationnelle au dispositif de détection.

9. Ligne de traitement de poissons selon la revendication 8, dans laquelle la ligne de traitement comprend, en outre, un dispositif de cuisson et de pelage (22), dans laquelle le dispositif de cuisson et de pelage comprend, de préférence, un dispositif combiné destiné à exécuter un traitement de cuisson et un traitement pelage.

10. Ligne de traitement de poissons selon la revendication 9, dans laquelle le dispositif de détection est agencé en amont du dispositif de cuisson et de pelage.

11. Navire (2) comportant un dispositif de pêche (102) et/ou une ligne de traitement de poissons selon une ou plusieurs des revendications précédentes.

12. Procédé (26) destiné à attraper et à ramener des crevettes ou poissons à bord d'une manière semi-continue ou continue, comprenant :
la prise, l'acheminement à bord, la détection, la classification et, si désiré, le tri des crevettes ou poissons ramenés à bord (32) avec un dispositif de pêche (102) et/ou une ligne de traitement de poissons selon une ou plusieurs des revendications précédentes ;
la réception, la mémorisation et la lecture et/ou la transmission de données obtenues avec le dispositif de détection concernant les crevettes ou poissons ramenés à bord, en utilisant le dispositif d'enregistrement raccordé de manière opérationnelle au dispositif de détection,
dans lequel les données comprennent des informations sur la quantité, la classification et la position des crevettes ou poissons attrapés, comprenant, en outre, l'étape de :
inspection automatique de la prise par rapport aux règlements, autorisations et certification, et production d'une alarme si la prise sort d'un ou plusieurs des critères de prise et/ou les excède, et/ou s'en rapproche.

13. Procédé selon la revendication 12, comprenant, en outre, l'étape de rejet des prises accessoires indésirables (36) et/ou comprenant, en outre, l'étape de transformation des crevettes embarquées.

14. Procédé selon la revendication 12 ou 13, comprenant, en outre, l'étape de transmission automatique des données et ainsi de contrôle de prise avec des critères de prise valides.
